# EUROPEAN PATENT APPLICATION

(11) **EP 0 584 948 A1**
(43) Date of publication of application: **02.03.1994**
(21) Application number: 93305841.4
(22) Date of filing: 23.07.1993
(51) Int. Cl.: A23P 1/08, A23J 3/16, A23L 1/31, A23L 1/054

(54) **Processed foods containing thermo-gelable beta-1,3-glucan and their production**

(30) Priority: 23.07.1992 JP 196784/92; 31.07.1992 JP 204953/92
(71) Applicant: Takeda Chemical Industries, Ltd., Osaka-shi, Osaka 541 (JP)
(72) Inventor: Tawada, Toshio, Minoo, Osaka 562 (JP); Nakao, Yukihiro, Tondabayashi, Osaka 584 (JP); Shimizu, Tadakazu, Toyonaka, Osaka 5600 (JP); Nakai, Yuji, Osaka 532 (JP)
(74) Representative: Laredo, Jack Joseph

(57) **Abstract**

A processed food having elasticity comprising a solid food and thermo-gelable β-1,3-glucan distributed over the entire surface layer of said solid food. The processed food is obtained by treating a dried solid food having water absorption properties with an aqueous dispersion of thermo-gelable β-1,3-glucan such that the β-glucan is absorbed into the surface layer of said dried solid food, optionally freezing the resulting food, and then heating said food. Frozen processed foods are also disclosed. The frozen processed food obtained by adhering thermo-gelable β-1,3-glucan or an aqueous dispersion thereof to the surface layer of a solid food and then freezing the resulting food.

## Description

### FIELD OF THE INVENTION

The present invention relates to processed foods containing thermo-gelable β-1,3-glucan and their production. More specifically, it relates to heat-processed or frozen processed foods containing thermo-gelable β-1,3-glucan and their production. The processed foods of the present invention are suitable for cooking or heating with a microwave oven and can be marketed in the form of frozen foods, foods packaged in retort pouches and the like.

### BACKGROUND OF THE INVENTION

To this date, dried processed foods, particularly dried granular soybean proteins and the like have widely been used in hamburgers, spaghetti sauces with minced meat, croquettes, Chinese ravioli, shao-mai, meat balls, meat buns and the like as substitutes for meat-like materials and meat raw materials. However, heat-processed foods produced by using such known dried processed foods have a dry texture to the mouth and tongue and odd flavor such as soybean flavor. Such a dry texture and flavor are clearly different from those of natural meat such as beef, pork and the like. Therefore, in view of the dry texture and soybean flavor, known dried processed foods are yet unsatisfactory as substitutes for meat-like materials and meat raw materials, and it is desired to improve the texture and flavor thereof.

Methods relating to thermo-gelable β-1,3-glucan include a method in which foods are mixed with thermo-gelable β-1,3-glucan to control hardness of foods (JP-B 45-18254), a method in which foods are produced by adding thermo-gelable β-1,3-glucan homogeneously before a heating step (U.S. Patent 3,754,925), a method in which surfaces of solid foods or dried cereals are coated with an aqueous dispersion of curdlan to form a curdlan film (JP-A 3-123454 and JP-A 3-172145), a method in which an aqueous dispersion of curdlan is adhered to surfaces of solid foods, followed by heating at 85°C or higher (JP-A 3-83546), and a method in which an aqueous dispersion of curdlan heated at about 50 to 70°C is adhered to surfaces of solid foods other than cereals (JP-A 3-172145).

However, there is no prior art disclosing a process for producing 1) heat-processed foods having alasticity by absorption of an aqueous dispersion or suspension of thermo-gelable β-1,3-glucan to a dried processed food having water absorption properties followed by heating, or 2) a frozen food for heat booking produced by absorption of thermo-gelable β-1,3-glucan to a dried prccessed food having water absorption properties followed by freezing.

### OBJECTS OF THE INVENTION

An object of the present invention is to provide processed foods, particularly dried processed foods, such as dried granular soybean proteins, frozen foods, foods packaged in retort pouches and the like, having improved quality.

Another object of the present invention is to provide processes for producing the processed foods of the present invention.

Another object of the present invention is to provide a food which is elastic or resilient or soft to the touch after being treated with β-1,3-glucan, frozen and heated.

These objects as well as other objects and advantages of the present invention will become apparent to those skilled in the art from the following description.

### SUMMARY OF THE INVENTION

The present inventors have conducted intensive research to improve the quality of dried processed foods, **i**.e., dried solid foods, so that hydrous foods having satisfactory quality are obtained from the dried solid foods. As a result of the research , the present inventors have found that, when thermo-gelable β-1,3-glucan is distributed over the surface layers of dried solid foods, quality thereof is remarkably improved.

In addition, it has been known that, when foods, particularly frozen foods, are heated or cooked with a microwave oven, the appearance, flavor and texture to the tongue and mouth deteriorate and it is difficult to obtain satisfactorily cooked foods having a good flavor and moisture content for a moist or juicy taste because of the volatiliza- tion of flavor, evaporation of water and increase in the dripping of water or natural oils. In this respect, the present inventors have also found that this difficulty can be overcome by distributing thermo-gelable β-1,3-glucan over the surface layers of frozen foods.

That is, according to the present invention, there is provided a processed food comprising a solid food and thermo-gelable β-1,3-glucan distributed over the surface layer of said solid food.

In one aspect of the present invention, the processed food has elasticity and is cbtained by treating a dried solid food having water absorption properties with an aqueous dispersion of thermo-gelable β-1,3-glucan such that the disprsion is absorbed into the surface layer of said solid food and then heating the resulting food.

In another aspect of the present invention, the processed food is a frozen processed food and is obtained by treating a dried solid food having water absorption properties with an aqueous dispersion of thermo-gelabbe β-1,3-glucan such that the dispersion is absorbed into the surface layer of said solid food and then freezing the resulting food.

In another aspect of the present invention, the processed food is a frozen processed food for cooking with a microwave oven and is obtained by adhering an aqueous dispersion of thermo-gelable β-1,3-glucan to the surface layer of a solid food and then freezing the resulting food.

The present invention also provide a process for producing a processed food having elasticity which comprises treating a dried solid food having water absorption properties with an aqueous dispersion of thermo-gelable β-1,3-glucan such that the β-glucan is absorbed into the surface layer of said dried solid food, optionally freezing the resulting food, and then heating said food.

The present invention further provide a process for producing a processed food which comprises adhering thermo- gelable β-1,3-glucan or an aqueous dispersion thereof to the surface layer of a solid food and then freezing the resulting food.

### DETAILED DESCRIPTION OF THE INVENTION

The term "food" used herein includes foods and food raw materials. The term, "solid food" used herein means any non-liquid food having a certain degree of shape retention properties which is not altered within a short period of time at room temperature and even under heating, i.e., any food which retains its shape under processing, such as in a household microwave oven. For example, the solid foods of the present invention Include conventional dried solid foods having water absorption properties, conventional foods which can be served immediately after cooking or heating with a microwave oven, and the like. The term "elasticity" used herein means elastic or resilient or soft to the touch.

As examples of the dried solid food having water absorption properties to be used in the invention, there may be mentioned dried granular soybean proteins in various sizes (e.g., sold by Takeda Chemical Industries, Ltd., Japan under the tradename of "Bontore C"), dried granular wheat proteins, dried fibrous soybean proteins, artificial meat products based on soybean and/or wheat proteins, dried edible raw meats **(**e.g., dried beef, etc.), dried processed meat products (e.g., ham, etc.), dried processed meat pate products (e.g., sausage, etc.), dried fish meat paste products (e.g., dried boiled fish paste products (kamaboko, chikuwa), etc.), dehydrated vegetables, various dried mushrooms (e.g., dried shiitake mushroom, etc.), dried processed soybean milk products (e.g., dried bean curd (tofu), dried fried bean curd, etc.), bread crumbs and the like. Preferably, the dried solid foods are dried proteinaceous foods such as dried granular soybean proteins, dried edible raw meats, dried meat products, dried artificial meat products, dried meat paste products and the like. Dried granular soybean proteins are most preferred.

Examples of foods which can be served immediately after cooking or heating with a microwave oven include edible raw meats (e.g., steak, beef, chicken, pork, etc.), meat products (e.g., hamburger steak, meat patty, chicken nugget (chicken pieces), sausage, etc.), meat paste products (e.g., sausage, etc.), artificial meat products based on soybean and/or wheat proteins, fish meat paste products (e.g., kamaboko, chikuwa, etc.), noodles, cakes (e.g., hot cake, etc.), confectionaries, potatoes (e.g., potato, sweet potato, taro, etc.), vegetables and fruits (e.g., asparagus, cabbage, carrot, etc.), daily dishes (e.g., mashed potato, etc.), cereals (e.g., rice, wheat, barley, oat, corn, etc.), processed cereal products (e.g., cooked rice, rice cake, breads, etc.) and the like. Preferably, such foods are proteinaceous food such as edible raw meats, meat products, artificial meat products and meat paste products, daily dishes, potatoes, cereal products, and the like.

In particular, the solid foods of the present invention are suitably proteinaceous foods such as dried granular soybean proteins, edible raw meats, meat products, artificial meat products and meat paste products, potatoes, daily dishes, cereal products and the like. The term "meat" used herein includes animal meat, poultry meat and fish meat.

The thermo-gelable β-1,3-glucan to be used in the present invention is a polysaccharide having thermo-gelable properties, which is composed of D-glucose units as constituent saccharide units joined to each other through β-1,3-glycosidic linkages. Its origin is not limited and it may be derived from microorganisms, animals, plants or the like.

Examples thereof include those described in New Food Industry, Vol. 20, p. 49-57, (1978).
(a) Curdlan
   Curdlan is a thermo-gelable polysaccharide mainly composed of glucose units joined to each other through β-1,3-glycosidic linkages produced by microorganisms. Examples thereof include polysaccharides produced by microorganisms belonging to the genus Alcaligenes or the genus Agrobacterium. Specifically, there can be used, for example, polysaccharides produced by Alcaligenes faecalis var. myxogenes 10C3K [Agricultural Biological Chemistry, Vol. 30, p. 196 (1966)], polysaccharides produced by a mutant NTK-u (IFO-13140) of Alcaligenes faecalis var. myxogenes 10C3K (JP-B 48-32673), polysaccharides produced by Agrobacterium radiobacter (IFO 13127) and its mutant U-19 (IFO-13126) (JP-B 48-32674) and the like.
(b) Paramylon
   Paramylon is a polysaccharide produced by microorganisms. Examples thereof include. polysaccharides produced by microorganisms belonging to the genus Euglena. Specifically, there can be used, for example, polysaccharides produced by Euglena gracilis Klebs NIES-47, Euglena gracilis Klebs NIES-48 or Euglena gracilis var. bacillaris pringsheim NIES-49. These strains are known strains maintained at the Global Environmental Forum of the National Institute for Environmental Studies (NIES). Among these polysaccharisdes, those having thermo-gelable properties can be used in the present invention. For example, thermo-gelable properties can be provided by dissolving the above polysaccharide in an alkali, removing insoluble materials and then adjusting the residue to pH 10 or lower to obtain deposits which can be used in the present invention.
(c) Pachyman
   Pachyman is a sclerotium glucan of Poria cocas.

Among these thermo-gelable β-1,3-glucans, curdlan is preferred in the present invention.

A dispersion of thermo-gelable β-1,3-glucan can be prepared by a per se known method. For example, the dispersion can be prepared by adding water to the thermo-gelable β-1,3-glucan to suspend the glucan, or by adding water to the thermo-gelable β-1,3-glucan and heating the mixture (e.g., at about 50 to about 70°C). The thermo-gelable β-1,3-glucan is not necessarily uniformly dispersed in the dispersion and it may be an aqueous suspension.

The processed food of the present invention can be produced, for example, by treating the solid food such as a dried solid food with an aqueous dispersion or suspension of thermo-gelable β-1,3-glucan Then, the dried solid food thus treated can be heated to obtain the desired heat processed food having elasticity of the present invention. Optionally, the food thus treated can be frozen before heating to obtain a heat processed food having elasticity, or can be simply frozen to obtain a frozen food of the present invention. The heat-processed or frozen processed food of the present invention thus obtained can be served as it is, or can be used as a raw material for the production of other foods. When it is used as a raw material, it can be suitably used during the production of the other food according to a per se known method.

For example, when curdlan is used as the thermo-gelable β-1,3-glucan and dried solid foods having water absorption properties are used as the solid food, the concentration of curdlan in an aqueous dispersion of curdlan is about 0.5 to about 10% by weight, preferably about 1 to about 5% by weight. The aqueous dispersion of curdlan can be prepared by adding water to curdlan to suspend it therein. The aqueous dispersion of curdlan can also be prepared by adding water to curdlan followed by heating at about 50 to about 70°C.

In the dispersion, there can also be added other additives or raw materials such as seasonings and flavors, for example, 5'-ribonucleotide, sodium L-glutamate (e.g., sold by Takeda Chemical Industries, Ltd., Japan under the tradename of "glutamic acid soda"), taste flavors (e.g., sold by Takeda Chemical Industries, Ltd., Japan under the tradename of "Ribotide"), extract flavors (e.g., sold by Takeda Chemical Industries, Ltd., Japan under the tradename of "Extract Flavor Beef No. 1"), salt, beef flavor, chicken flavor, shrimp flavor and the like; oils and fats, for example, vegetable oils and fats (e.g., soybean oil, cotton oil, etc.), animal oils and fats (e.g., tallow, lard, etc.) and the like; starches, for example, sweet potato starch, potato starch, wheat starch, corn starch (e.g., waxy corn starch manufactured by Sanwa Denpun, Japan), rice starch, tapioca starch, sago starch, modified starch thereof and the like; pH adjustors, for example, citric acid and the like; emulsifying agents, for example, sucrose fatty acid esters, glycerin fatty acid esters and the like; and colorants, for example, natural pigments (e.g., paprika, monuscus, etc.), synthetic pigments (e.g., Ponceau 4R (New Coccine), Phloxine, etc.) and the like. These can be used alone or in combinations thereof.

The treatment of the dried solid food having water absorption properties with the aqueous dispersion of thermo- gelable β-1,3-glucan can be carried out, for examples, by dipping or soaking the dried solid food in the dispersion, mixing the dried solid food with the dispersion, or spraying the dispersion on to the dried solid food so that thermo-gelable β-1,3-glucan is absorbed into the surface layer of the dried solid food.

The amount of the aqueous dispersion of thermo- gelable β-1,3-glucan to be used is about 0.2 to about 5 parts by weight, preferably about 0.5 to about 3 parts by weight per part by weight of the dried solid food having water absorption properties so that the amount of thermo-gelable β-1,3-glucan becomes about 0.1 to about 4% by weight, preferably about 0.2 to about 2% by weight based on the total height of the desired processed food of the present invention. When the heat-processed or frozen processed food of the present invention is used as a raw material of other foods, it can be used in such an amount that about 0.001 to about 4% by weight, preferably about 0.02 to about 4% by height of the thermo-gelable β-1,3-glucan is present in the desired end food.

As described above, the dried solid food which has absorbed the aqueous dispersion thermo-gelable β-1,3-glucan can be directly heated at about 85 to about 180°C as it is, Or, after frozen storage at about -5 to about -60°C, it can be heated. Further, the heated food can be used after frozen storage and it can be further subjected to drying. For example, granular soybean proteins which absorbed the aqueous dispersion of thermo-gelable β-1,3-glucan can be mixed with foods such as hamburger, Chinese ravioli or the like, followed by heating.

Further, the dried solid foods which absorbed the aqueous dispersion of thermo gelable β-1,3-glucan can be placed in a container such as casing, molds or the like, or molded by rolling molding, followed by heating. The heating method is not specifically limited and can be heating on a hot water bath, boiling, heating on an oil bath, microwave heating or the like.

The processed food of the present invention thus obtained can be used for cooking with a microwave oven, or packaged in a retort pouch.

Alternatively, the processed food of the present invention can be produced by treating solid food, such as food which can be served immediately after heating with a microwave oven, with thermo-gelable β-1,3-glucan or its aqueous dispersion or suspension and then freezing the food thus treated to adhere thermo-gelable β-1,3-glucan to the surface layer of the food and to for a coating, preferably a uniform coating of the thermo-gelable β-1,3-glucan over at least a part of the surface, preferably the entire surface thereof to obtain the desired frozen processed food of the present invention.

For example, when curdlan is used as the thermo-gelable β-1,3-glucan and foods which can be served immediately after heating with a microwave oven are used as the solid food, the concentration of curdlan in an aqueous dispersion of curdlan is about 0.1 to about 20% by weight, preferably about 0.5 to about 7% by weight, more preferably about 1 **to** about 5% by weight. The aqueous dispersion of curdlan can be prepared by adding water to the curdlan to suspend it therein. The aqueous dispersion of curdlan can also be prepared by adding water to curdlan followed by heating at about 50 to about 70°C. For obtaining a uniform coating of curdlan, it is preferred to homogenize the dispersion before heating. For example, the dispersion can be prepared by 1) dispersing curdlan into water at room temperature and then heating the resulting dispersion at about 50 to about 70°C, or 2) dispersing curdlan into water at room temperature and then adding additional water which has been heated at a high temperature such as about 80 to about 100°C to immediately bring the temperature of the resulting mixture to about 50 to about 70°C.

In the dispersion, there can also be added other additives and raw materials as described above.

For adhering thermo-gelable β-1,3-glucan or the aqueous dispersion thereof to the food, the food is, for example, dipped or soaked in the dispersion or the dispersion is applied or sprayed onto the surface of the food. Or, when a large amount of water is present at the surface layer of the food, powdered thermo-gelable β-1,3-glucan can be distributed or sprinkled over the surface of the food so that the above concentration can be obtained. In any event, in this feature of the present invention, thermo-gelable β-1,3-glucan in the for of an aqueous dispersion is uniformly adhered to the surface layer of the food. In particular, dipping or soaking is preferred.

In the case of dipping, the dipping time is not specifically limited but, in general, dipping can be carried out for about 1 to about 30 seconds. In the case of application, an aqueous dispersion of thermo-gelable β-1,3-glucan at about 30 to about 70°C can be applied on the surface of the food with a brush or spatula and then, if necessary, dried. In the case of spraying, a predetermined amount of a warmed dispersion of thermo-gelable β-1,3-glucan can be sprayed with a suitable apparatus such as an automatic ventilating coating pan within a suitable period of time. When using such apparatus, the dispersion of thermo-gelable β-1,3-glucan is sprayed at about 30 to about 70°C, preferably at about 50 to about 70°C and warm air is circulated about the food to form coating of thermo-gelable β-1,3-glucan on the surface of the food. The air is preferably warmed at such a temperature that the surface of the food is maintained at about 25 to about 50°C. The spraying time and the amount of dispersion to be fed to the apparatus are not specifically limited and suitable spray conditions can be selected so that pieces of the food to be treated do not adhere to each other and good productivity can be maintained. For example, good results can be obtained by spraying the above curdlan dispersion at a feeding rate of about 1 to about 30 ml/min/kg.

The amount of the aqueous dispersion of thermo-gelable β-1,3-glucan to be adhered to the food is not specifically limited. Normally, about 0.01 g/cm² to about 0.3 g/cm² of the dispersion is suitably adhered to the surface of the food so that the amount of thermo-gelable β-1,3-glucan is about 0.001 to about 1% by weight, preferably about 0.005 to about 0.5% by weight based on the total amount of the desired processed food of the present invention.

The food thus treated with thermo-gelable β-1,3-glucan can be frozen as is. Or, it can be heated at about 85°C or higher to form a coating and then frozen. The method of heating is not specifically limited and heating can be carried out by a water bath heating, boiling, oil bath heating, microwave heating or the like. Suitably, the heating temperature is about 85 to about 180°C and the heating time is about 5 seconds to about 20 minutes. In practice, the heating conditions can be selected according to the kind of food.

Normally, freezing can be carried out at about -5°C or lower, preferably at about -20 to about -100°C. Frozen storage can be carried out at about -18°C or lower.

The frozen food thus obtained can be used for cooking with a microwave oven.

Thus, according to the present invention, there are provided hydrous heated processed foods which are elastic and soft and have an improved texture to the tongue and mouth with little odd flavor. Further, in the case of frozen foods, according to the present invention, water evaporation during frozen storage as well as flavor volatilization, water evaporation and dripping during microwave cooking are minimized . Then, even after frozen storage and microwave cooking, deterioration of quality of foods such as appearance, taste and flavor is minimized, and the frozen foods which can be converted to hot and juicy foods upon microwave cooking can be obtained.

The following Examples and Reference Example further illustrate the present invention in detail but are not to be construed to limit the scope thereof.

Curdlan used in the following Examples and Reference Example was powdered curdlan which was produced by a mutant NTK-u (IFO-13140) of Alcaligenes faecalis var. myxogenes 10C3K in a culture and collected and purified from the culture followed by spray drying.

### Example 1

An aqueous dispersion of curdlan was obtained by mixing curdlan (24 g) and water (776 g) with stirring. The resulting dispersion (500 g) was mixed with dried granular soybean protein (sold by Takeda Chemical Industries, Ltd., Japan under the tradename of "Bontore C")(200 g) to absorb the dispersion into the dried granular soybean protein. This was heated with a microwave oven for 2 minutes to obtain elastic soybean protein having texture to the tongue and mouth similar to that of meat.

### Example 2

Curdlan (40 g), waxy corn starch (manufactured by Sanwa Denpun, Japan) (40 g) and water (760 g) were placed in a household mixer and stirred for 5 minutes to obtain an aqueous dispersion. The dispersion (600 g) was mixed with dried granular soybean protein (sold by Takeda Chemical Industries, Ltd., Japan under the tradename of "Bontore C") (200 g) such that the dispersion was absorbed into the dried granular soybean protein. Then, the resulting soybean protein was placed in a casing of 3 cm diameter, frozen rapidly at -40°C and then stored at -20°C for one month. This was thawed and then heated in boiling water for 30 minutes. As a result, elastic soybean protein having texture to the tongue and mouth similar to that of meat was obtained.

### Example 3

An aqueous curdlan dispersion was obtained by mixing curdlan (20 g), extract flavor (sold by Takeda Chemical Industries, Ltd., Japan under the tradename of "Extracted Flavor Beef No. 1")(1 g) and water (779 g) with stirring. The dispersion (500 g) was mixed with dried granular soybean protein (sold by Takeda Chemical Industries, Ltd., Japan under the tradename of "Bontore C")(200 g) such that the dispersion was absorbed into the dried granular soybean protein. This hydrous material (150 g), beef (350 g), lard (150 g), salt (10 g), spice (10 g), seasoning (3 g)[(sold by Takeda Chemical Industries, Ltd., Japan under the tradename of "glutamic acid soda")(2.7 g) and (sold by Takeda Chemical Industries, Ltd., Japan under the tradename of "Ribotide")(0.3 g)], bread crumbs (50 g), egg (100 g) and onion (200 g) were mixed in a conventional manner, molded and then baked to obtain a hamburger-like product. The hamburger-like product obtained had a soft texture to the tongue and mouth like that of hamburger prepared from animal meet, elasticity and good taste.

### Example 4

Isolated soybean protein (sold by Fuji Oil Co., Ltd., Japan under the tradename of "New Fuji Pro SE")(5 g), seasonings (5.2 g)[glutamic acid soda (2 g), Ribotide (0.2 g) and vegetable protein hydrolyzate (sold by Takeda Chemical Industries, Ltd., Japan under the tradename of "Amiflex B-2") (3 g)], salt (2.5 g), spice (0.5 g) were added to water (420 g) and mixed. To the mixture corn salad oil (50 g) was added and emulsified with TK homo-mixer to obtain an emulsion. The emulsion was mixed with dried granular soybean protein (sold by Takeda Chemical Industries, Ltd., Japan under the tradename of "Bontore C-200")(100 g) such that the dried granular soybean protein absorbed the emulsion. The soybean protein was steamed for 15 minutes to obtain the desired soybean protein which had a minced meat appearance and was elastic and had a texture to the tongue and mouth similar to meat with little soybean flavor.

### Example 5

Curdlan (12 g) and water (308 g) were placed in a 1 liter container and hot water (90°C) (480 g) was added thereto to obtain an aqueous dispersion of curdlan. The dispersion was maintained in a water bath at 60°C and grilled hamburger steak (100 g) was dipped for 3 seconds therein and then immediately frozen at -40 °C for 1 hour. It was then stored at 20°C for 1 month. The frozen steak was cooked with a microwave oven and tasted. The appearance, taste and moisture content were similar to that of steak prepared directly from its raw state.

### Example 6

Curdlan (28 g), starch (4 g), xanthan gum (0.8 g) and water (767 g) were placed in a household mixer and stirred for 10 minutes to obtain a dispersion. A meat patty was dipped in the dispersion for about 3 seconds and then heated in a palm oil bath at 130°C for 40 seconds to prepare the meat patty covered by a curdlan coating. This was frozen and stored at -20°C for 1 month. It was then heated with a microwave oven. The taste and texture to the mouth and tongue and moisture content were similar to that of a meat patty prepared directly from its raw state.

### Reference Example 1

Curdlan (28 g) and water (772 g) were placed in a household mixer and stirred for 10 minutes to obtain a dispersion. A hamburger steak (100 g) was dipped in the dispersion for about 3 seconds to obtain a hamburger steak coated with curdlan. It was then heated with a microwave oven. The appearance and taste were good.

## Claims

1. A processed food comprising a solid food and thermo-gelable β-1,3-glucan distributed over the surface layer of said solid food.

2. A processed food according to Claim 1, wherein said thermo-gelable β-1,3-glucan is derived from a microorganism.

3. A processed food according to Claim 1 or Claim 2, wherein said thermo-gelable β-1,3-glucan is curdlan.

4. A processed food according to any of Claims 1 to 3, wherein said solid food is a proteinaceous food.

5. A processed food according to Claim 4, wherein said proteinaceous food is selected from the group consisting of dried granular soybean proteins, dried edible raw meats, dried meat products, dried artificial meat products and dried meat paste products.

6. A processed food according to Claim 4, wherein said proteinaceous food is dried granular soybean proteins.

7. A processed food according to any of Claims 1 to 6, wherein said processed food has elasticity and is obtained by treating a dried solid food having water absorption properties with an aqueous dispersion of thermo-gelable β-1,3-glucan such that the dispersion is absorbed into the surface layer of said solid food and then heating the resulting food.

8. A processed food according to Claim 7, wherein the food treated with said aqueous dispersion of thermo-gelable β-1,3-glucan is frozen before heating.

9. A processed food according to Claim 7 or Claim 8, wherein said processed food contains 0.1 to 4% by weight of said thermo-gelable β-1,3-glucan.

10. A processed food according to any of Claims 1 to 6, wherein said processed food is a frozen processed food and is obtained by treating a dried solid food having water absorption properties with an aqueous dispersion of thermo-gelable β-1,3-glucan in such manner that said dispersion is absorbed into the surface layer of said solid food, and then freezing the resulting food.

11. A processed food according to Claim 10, wherein said processed food contains 0.1 to 4% by weight of the thermo-gelable β-1,3-glucan.

12. A processed food according to Claim 10 or Claim 11, wherein said processed food is a frozen processed food for cooking with a microwave oven.

13. A processed food according to any of Claims 1 to 4, wherein said processed food is a frozen processed food for cooking with a microwave oven and is obtained by adhering an aqueous dispersion of thermo-gelable β-1,3-glucan to the surface layer thereof of a solid food and then freezing the resulting food.

14. A processed food according to Claim 13, wherein said processed food contains 0.001 to 1% by weight of said thermo-gelable β-1,3-glucan.

15. A processed food according to Claim 13, wherein said solid food is a food which can be served immediately after heating with a microwave oven.

16. A processed food according to Claim 13 or Claim 15, wherein said solid food is a proteinaceous food selected from the group consisting of edible raw meats, meat products, artificial meat products and meat paste products.

17. A processed food according to Claim 13 or Claim 15, wherein said processed food is selected from the group consisting of potatoes and cereal products.

18. A processed food according to any of Claims 13 to 17, wherein said processed food comprises a uniform coating of thermo-gelable β-1,3-glucan over substantially the entire surface layer of the solid food.

19. A process for producing a processed food which comprises treating a dried solid food with an aqueous dispersion of thermo-gelable β-1,3-glucan in such manner that the β-1,3-glucan is absorbed into the surface layer of said dried solid food, optionally freezing, and then heating the resulting food.

20. A process according to Claim 19, wherein said aqueous dispersion contains 0.5 to 10% by weight of thermo-gelable β-1,3-glucan, and said dried solid food is treated with 0.2 to 5 parts by weight of said aqueous dispersion per 1 part by weight of said dried solid food.

21. A process for producing a processed food which comprises adhering an aqueous dispersion of thermo-gelable β-1,3-glucan to the surface layer of a solid food and then freezing the resulting food.

22. A process according to Claim 21, wherein said aqueous dispersion contains 0.1 to 20% by weight of thermo-gelable β-1,3-glucan.
